# EUROPEAN PATENT APPLICATION

(11) **EP 3 444 696 A1**
(43) Date of publication of application: **20.02.2019**
(21) Application number: 18189205.0
(22) Date of filing: 15.08.2018
(51) Int. Cl.: G05D 1/06

(54) **ROTORCRAFT MULTIPLE PROFILE CAT-A GUIDANCE**

(30) Priority: 17.08.2017 US 201762547002 P; 11.07.2018 US 201816032928
(71) Applicant: Bell Helicopter Textron Inc., Fort Worth, TX 76101 (US)
(72) Inventor: WORSHAM II, Robert Earl, Weatherford, TX 76088 (US); GILLETT, Luke Dafydd, Grapevine, TX 76051 (US); CAUDILL, Troy, Burleson, TX 76028 (US); REGNIER, Bradley Paul, Ft. Worth, TX 76131 (US); O'NEIL, Joshua Robert, Bedford, TX 76021 (US); THOMAS, Brandon Jeffrey, Crowley, TX 76036 (US)
(74) Representative: Barker Brettell LLP

(57) **Abstract**

In an embodiment, a rotorcraft (100) includes a rotor system (110) including a plurality of blades (120); two or more engines operable to rotate the plurality of blades (120); a control assembly (262, 264, 266, 302) operable to receive commands from a pilot; a flight control computer (FCC) (304) in signal communication with the two or more engines, the FCC (304) being operable to generate engine data indicating whether the two or more engines are functional; and a flight management system (FMS) (306) in signal communication with the control assembly (262, 264, 266, 302) and the FCC (304), the FMS (306) being operable to receive a takeoff type and a plurality of takeoff parameters input into the FMS (306) by the pilot; generate a guidance profile for a Category A (Cat-A) takeoff procedure based on the takeoff type and the plurality of takeoff parameters, the Cat-A takeoff procedure including one or more decision points for performing a takeoff procedure based on whether all engines are operable or one engine is inoperable; receive a command to engage in a takeoff procedure from the control assembly (262, 264, 266, 302); in response to the command to engage in the takeoff procedure, provide guidance cues to a pilot of the rotorcraft (100); receive the engine data from the FCC (304) during operation of the rotorcraft (100); and update the guidance profile based on the engine data during operation of the rotorcraft (100).

## Description

### CROSS-REFERENCE TO RELATED APPLICATIONS

This application claims the benefit of U.S. Provisional Application No. 62/547,002, filed on August 17, 2017, titled "Rotorcraft Multiple Profile Cat-A Guidance," which application is hereby incorporated by reference in its entirety.

### TECHNICAL FIELD

The present disclosure generally relates to aircraft flight control systems, and more particularly, to rotorcraft fly-by-wire (FBW) control laws. In particular embodiments, the present disclosure relates to a system and method for providing guidance cues to a pilot for performing a Category A (Cat-A) takeoff maneuver.

### BACKGROUND

A Cat-A takeoff procedure is used to ensure that a rotorcraft takes off safely. The Cat-A takeoff procedure includes a takeoff decision point (TDP), which is used to ensure that a pilot takes off safely in the event of an engine failure. If the rotorcraft loses an engine before the TDP, the pilot lands the rotorcraft. On the other hand, if the rotorcraft loses an engine after the TDP, the pilot climbs from the point of failure and attains forward flight. Thus, by using a Cat-A takeoff procedure, a pilot is able to safely take off or abort a takeoff, even in the event of an engine failure.

### SUMMARY

In accordance with an embodiment, a rotorcraft includes a rotor system including a plurality of blades; two or more engines operable to rotate the plurality of blades; a control assembly operable to receive commands from a pilot; a flight control computer (FCC) in signal communication with the two or more engines, the FCC being operable to generate engine data indicating whether the two or more engines are functional; and a flight management system (FMS) in signal communication with the control assembly and the FCC, the FMS being operable to receive a takeoff type and a plurality of takeoff parameters input into the FMS by the pilot; generate a guidance profile for a Category A (Cat-A) takeoff procedure based on the takeoff type and the plurality of takeoff parameters, the Cat-A takeoff procedure including one or more decision points for performing a takeoff procedure based on whether all engines are operable or one engine is inoperable; receive a command to engage in a takeoff procedure from the control assembly; in response to the command to engage in the takeoff procedure, provide guidance cues to a pilot of the rotorcraft; receive the engine data from the FCC during operation of the rotorcraft; and update the guidance profile based on the engine data during operation of the rotorcraft. In an embodiment, the FMS is further configured to generate location data based on the current location of the rotorcraft and update the guidance profile based on the location data. In an embodiment, the takeoff type includes a runway takeoff, an elevated helipad takeoff, or a ground-level helipad takeoff. In an embodiment, the takeoff parameters include ambient condition data and rotorcraft data. In an embodiment, the ambient condition data includes one or more of a wind direction, a wind speed, a pressure altitude, an outside ambient temperature (OAT), and a density altitude.

In accordance with another embodiment, a method for operating a rotorcraft includes receiving takeoff data in a flight management system (FMS), the takeoff data comprising a takeoff type, ambient condition parameters, and helicopter parameters; generating a guidance profile in the FMS for a Category A (Cat-A) takeoff procedure based on the takeoff data, the guidance profile comprising a plurality of waypoints, the plurality of waypoints comprising one or more decision points used to direct the operation of the rotorcraft in case of an engine failure; receiving a command in the FMS to engage in a takeoff procedure; providing cues to a pilot to fly the rotorcraft along the guidance profile; and updating the guidance profile as the rotorcraft moves along the guidance profile. In an embodiment, the guidance profile is updated based on location data indicating the location of the rotorcraft. In an embodiment, the rotorcraft includes two or more engines, and the guidance profile is updated based on engine data indicating whether the two or more engines are operable or inoperable. In an embodiment, the plurality of waypoints includes a takeoff decision point (TDP), and updating the guidance profile includes guiding the rotorcraft to a landing point in response to the engine data indicating that at least one of the two or more engines is inoperable before the rotorcraft has reached the TDP. In an embodiment, updating the guidance profile includes continuing the takeoff procedure in response to the engine data indicating that at least one of the two or more engines is inoperable after the rotorcraft has reached the TDP. In an embodiment, the takeoff type is a runway takeoff, an elevated helipad takeoff, or a ground-level helipad takeoff. In an embodiment, the takeoff type is the runway takeoff and the takeoff decision point (TDP) includes an airspeed of 30 KIAS and a height of 10 feet. In an embodiment, the takeoff type is the elevated helipad takeoff and the takeoff decision point (TDP) is a height of 35 feet above a top surface of an elevated helipad from which the rotorcraft is to takeoff. In an embodiment, the takeoff type is the ground-level takeoff and the takeoff decision point (TDP) is a height of between 80 feet and 120 feet above a top surface of a ground-level helipad from which the rotorcraft is to takeoff.

In accordance with yet another embodiment, a device for a rotorcraft includes a processor; and a non-transitory computer-readable storage medium storing a program to be executed by the processor, the program including instructions for providing guidance cues to a pilot for performing a takeoff procedure, the instructions for providing the guidance cues including instructions for generating a flight path in response to the pilot entering takeoff data, the flight path including a plurality of waypoints between a current location of the rotorcraft and a completed takeoff point (CTP), the takeoff data including a takeoff type, ambient condition parameters, and a gross weight of the rotorcraft; generating the guidance cues to fly the rotorcraft along the flight path to the CTP; displaying the guidance cues to the pilot in response to the pilot entering an engage takeoff command; updating flight path and the guidance cues in response to flight data provided to the processor, the flight data indicating a current condition of the rotorcraft; and displaying the updated guidance cues to the pilot. In an embodiment, the takeoff procedure includes a Cat-A takeoff procedure. In an embodiment, the flight data includes data indicating whether two or more engines of the rotorcraft are operable or inoperable. In an embodiment, the plurality of waypoints includes a takeoff decision point (TDP), the updated flight path includes a plurality of waypoints between a current location of the rotorcraft and a landing point when the flight data indicates that two or more of the engines of the rotorcraft are inoperable before the rotorcraft reaches the TDP. In an embodiment, the plurality of waypoints includes a takeoff decision point (TDP), wherein the updated flight path includes a plurality of waypoints between a current location of the rotorcraft and an updated CTP when the flight data indicates that two or more of the engines of the rotorcraft are inoperable after the rotorcraft reaches the TDP. In an embodiment, the takeoff type includes a runway takeoff, an elevated helipad takeoff, or a ground-level helipad takeoff.

### BRIEF DESCRIPTION OF THE DRAWINGS

For a more complete understanding of the present invention, and the advantages thereof, reference is now made to the following descriptions taken in conjunction with the accompanying drawings, in which:
**Figure 1** illustrates a rotorcraft according to some embodiments;
**Figure 2** illustrates a cockpit configuration of a rotorcraft according to some embodiments;
**Figure 3** illustrates a flight command system of a rotorcraft according to some embodiments;
**Figure 4** illustrates a three-loop flight control system according to some embodiments;
**Figure 5** illustrates a method for performing a takeoff procedure according to some embodiments;
**Figure 6** illustrates a step of a method for performing a takeoff procedure in greater detail according to some embodiments;
**Figure 7** illustrates a method for performing a takeoff procedure from a runway according to some embodiments;
**Figure 8** illustrates a takeoff profile for performing a takeoff procedure from a runway according to some embodiments;
**Figure 9** illustrates a method for performing a takeoff procedure from an elevated helipad according to some embodiments;
**Figures 10A and 10B** illustrate a takeoff profile for performing a takeoff procedure from an elevated helipad according to some embodiments;
**Figure 11** illustrates a method for performing a takeoff procedure from a ground-level helipad according to some embodiments;
**Figure 12** illustrates a takeoff profile for performing a takeoff procedure from a ground-level helipad according to some embodiments.

### DETAILED DESCRIPTION OF ILLUSTRATIVE EMBODIMENTS

Illustrative embodiments of the system and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

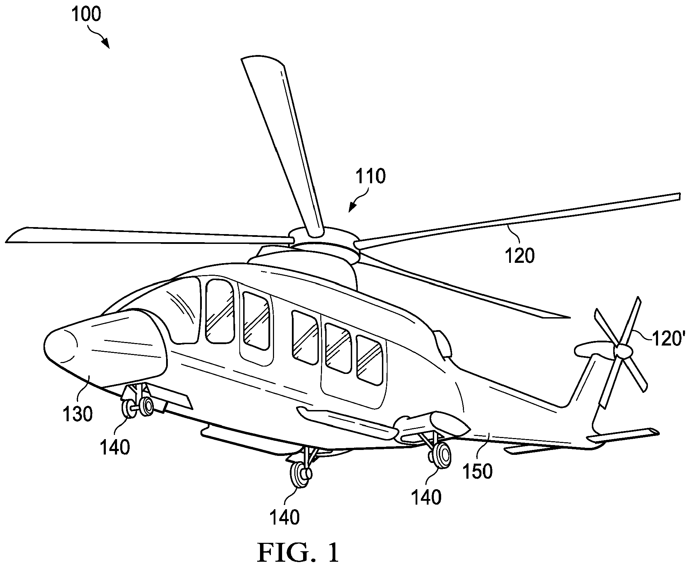

Figure 1 illustrates a rotorcraft 100 according to a representative embodiment. The rotorcraft 100 includes a rotor system 110, main rotor blades 120, a fuselage 130, landing gear 140, and a tail boom 150. The rotor system 110 may rotate the main rotor blades 120. The rotor system 110 may include a control system for selectively controlling a pitch of each of the main rotor blades 120 to selectively control the direction, thrust, and lift of the rotorcraft 100. The fuselage 130 comprises the body of the rotorcraft 100 and may be coupled to the rotor system 110 such that the rotor system 110 and the main rotor blades 120 move the fuselage 130 through the air in flight. The landing gear 140 supports the rotorcraft 100 during landing or when the rotorcraft 100 is at rest on the ground. The tail boom 150 represents the rear section of the rotorcraft 100 and has components of the rotor system 110 and tail rotor blades 120'. The tail rotor blades 120' counter torque effect created by the rotor system 110 and the main rotor blades 120. Teachings of certain embodiments relating to rotor systems described herein may apply to the rotor system 110 or other rotor systems (e.g., tilt rotorcraft, tandem rotorcraft, or other helicopter rotor systems). It should also be appreciated that representative embodiments of the rotorcraft 100 may apply to aircraft other than rotorcraft, such as airplanes, unmanned aircraft, or the like.

A pilot may manipulate one or more pilot flight controls to achieve controlled aerodynamic flight. Inputs provided by the pilot to the pilot flight controls may be transmitted mechanically or electronically (for example, via a fly-by-wire system) to flight control devices. The flight control devices may include devices operable to change flight characteristics of the aircraft. Representative flight control devices may include a control system operable to change a configuration of the main rotor blades 120 or the tail rotor blades 120'.

In some embodiments, the rotorcraft 100 may include a flight control system (FCS) and a flight control computer (FCC). The FCC is in electrical communication with the FCS and the FCC controls the FCS. Inputs from the pilot are sent to the FCC and the FCC controls the FCS based on the pilot inputs, control laws, other logic, and the like.

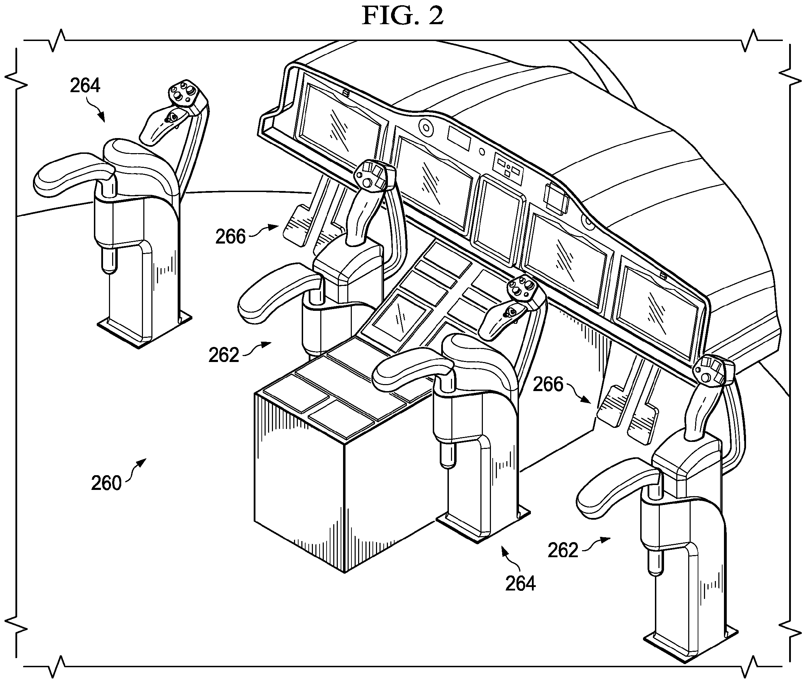

Figure 2 illustrates a cockpit configuration 260 of the rotorcraft 100 according to a representative embodiment. The rotorcraft 100 may include, e.g., three sets of pilot flight controls (e.g., cyclic control assemblies 262, collective control assemblies 264, and pedal assemblies 266). In accordance with a representative embodiment, a pilot and a co-pilot (both of which may be referred to as a "pilot" for purposes of discussion herein) may each be provided with an individual pilot flight control assembly comprising a cyclic control assembly 262, a collective control assembly 264, and a pedal assembly 266.

In general, the cyclic pilot flight controls may allow a pilot to impart cyclic configurations to the main rotor blades 120. Varied cyclic configurations of the main rotor blades 120 may cause the rotorcraft 100 to tilt in a direction specified by the pilot. For tilting forward and back (pitch) or tilting side-to-side (roll), the angle of attack of the main rotor blades 120 may be altered with cyclic periodicity during the rotation of the rotor system 110, thereby creating variable amounts of lift at varied points in the rotation cycle. Alteration of the cyclic configuration of the main rotor blades 120 may be accomplished by an input from the cyclic control assembly 262.

The collective pilot flight controls may allow a pilot to impart collective configurations (e.g., collective blade pitch) to the main rotor blades 120. Collective configurations of the main rotor blades 120 may change the overall lift produced by the main rotor blades 120. For increasing or decreasing the overall lift in the main rotor blades 120, the angle of attack for all of the main rotor blades 120 may be collectively altered by equal amounts and at the same time, resulting in ascent, descent, acceleration, or deceleration. Alteration of the collective configuration of the main rotor blades 120 may be accomplished by input from the collective control assembly 264.

Anti-torque pilot flight controls may allow a pilot to change the amount of anti-torque force applied to the rotorcraft 100. The tail rotor blades 120' may operate to counter torque created by the rotor system 110 and the main rotor blades 120. The anti-torque pilot flight controls may change the amount of anti-torque force applied to change a heading (yaw) of the rotorcraft 100. For example, providing anti-torque force greater than the torque effect created by the rotor system 110 and the main rotor blades 120 may cause the rotorcraft 100 to rotate in a first direction, whereas providing anti-torque force less than the torque effect created by the rotor system 110 and the main rotor blades 120 may cause the rotorcraft 100 to rotate in a second direction opposite the first direction. In some embodiments, the anti-torque pilot flight controls may change the amount of anti-torque force applied by changing the pitch of the tail rotor blades 120', thereby increasing or reducing the thrust produced by the tail rotor blades 120' and causing the nose of the rotorcraft 100 to yaw in a direction corresponding to the application of input from the pedal assembly 266.

In other embodiments, the rotorcraft 100 may include additional or different anti-torque devices, such as a rudder or a no-tail-rotor (NOTAR) anti-torque device. Conjunctive or alternative anti-torque embodiments may be operable to change an amount of anti-torque force provided by such additional or different anti-torque device or system.

In some embodiments, the cyclic control assembly 262, the collective control assembly 264, and the pedal assemblies 266 may be used in a fly-by-wire (FBW) system. In an example as representatively illustrated in Figure 2, each cyclic control assembly 262 is located to the right of a pilot seat, each collective control assembly 264 is located to the left of the pilot seat, and each pedal assembly 266 is located in front of the pilot seat. In other embodiments, the cyclic control assemblies 262, the collective control assemblies 264, and the pedal assemblies 266 may be disposed in any suitable location of a cockpit configuration.

In some embodiments, the cyclic control assembly 262, the collective control assembly 264, and the pedal assemblies 266 may be in mechanical communication with trim assemblies that convert mechanical inputs into FBW system flight control commands. These trim assemblies may include, among other items, measurement devices for measuring mechanical inputs (e.g., measuring or otherwise determining input position) and trim motors for back-driving center positions of the cyclic control assembly 262, the collective control assembly 264, or the pedal assemblies 266.

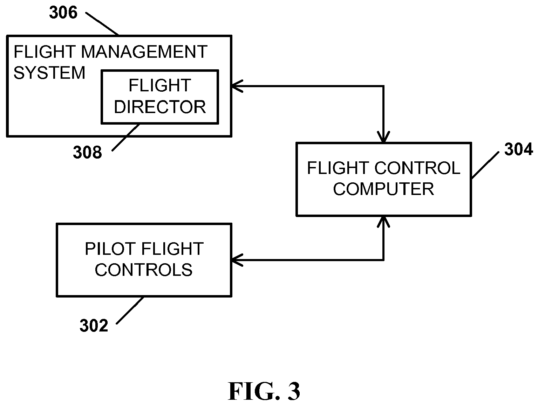

Figure 3 representatively illustrates flight command systems 300 of the rotorcraft 100. The flight command systems 300 may include pilot flight controls 302, a flight control computer (FCC) 304 a flight management system (FMS) 306, and a flight director (FD) 308. The pilot flight controls 302 and the FMS 306 are in signal communication with the FCC 304, as illustrated in Figure 3. The pilot flight controls 302 may include a cyclic control assembly, a collective control assembly, and a pedal assembly, as discussed previously. The pilot flight controls 302 are used to provide controls from a pilot to the FCC 304.

In some embodiments, the FD 308 may be included in the FMS 306. Although the FD 308 is illustrated as being included in the FMS 306, in some embodiments, the FD 308 may be implemented by both the FMS 306 and the FCC 304. The FD 308 may include an input (not separately illustrated), such as a keypad, a touchscreen, or the like, which may be used by the pilot to enter commands, data, and the like into the FD 308 of the FMS 306. The FD 308 may further include a display which may be used to provide information to the pilot, such as guidance cues for performing a Cat-A takeoff procedure.

As will be discussed in further detail below, the FMS 306 generates a guidance profile for flight based on data entered by the pilot into the FD 308. The FMS 306 may also receive data from the FCC 304, various sensors located on the body of the rotorcraft 100 (e.g., global positioning system (GPS) sensors, inertial sensors, other position sensors, and the like), and sources external to the rotorcraft 100 and may update the guidance profile based on this data. In some embodiments, the FMS 306 may merely provide guidance cues to the pilot through the FD 308; however, in other embodiments, the FMS 306 may fly the rotorcraft 100 along the guidance profile by providing commands directly to the FCC 304.

The FCC 304 provides control signals to the rotorcraft 100's engines, various actuators, and the like in order to control the flight of the rotorcraft 100. As will be discussed in greater detail below, the FCC 304 may provide stabilization control to the rotorcraft 100. The FCC 304 may receive data signals from the pilot flight controls 302 and the FMS 306 and control the flight of the rotorcraft 100 accordingly.

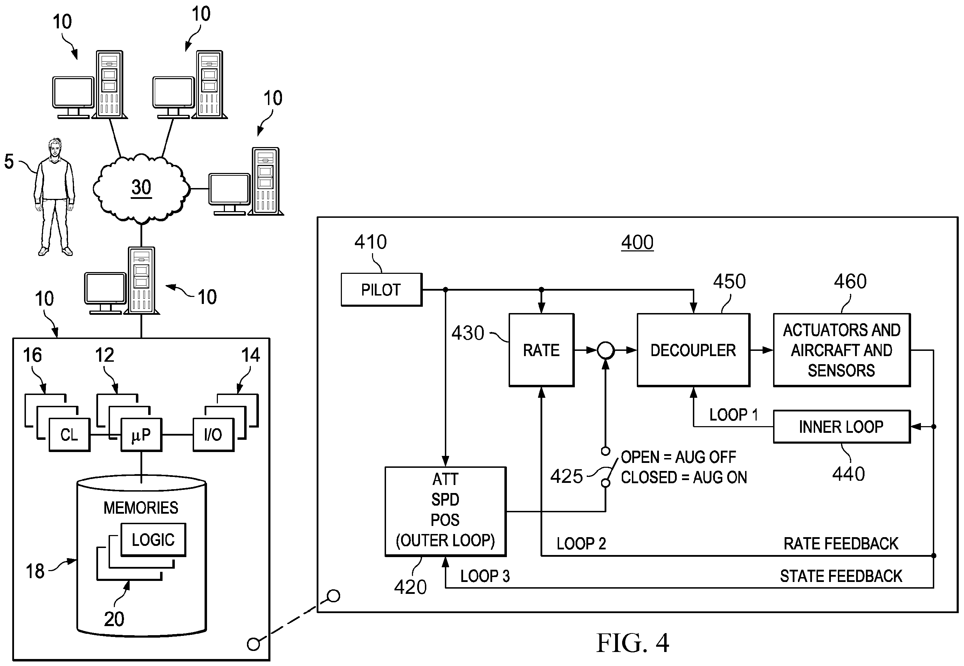

Figure 4 representatively illustrates a three-loop FCS 400 according to an embodiment. Elements of the three-loop FCS 400 may be implemented at least partially by one or more computer systems 10. All, some, or none of the components of the three-loop FCS 400 may be located on or near an aircraft such as a rotorcraft 100. The three-loop FCS 400 of Figure 4 has a pilot input 410, an outer loop 420, a rate (middle) loop 430, an inner loop 440, a decoupler 450, and aircraft equipment 460.

In the example of Figure 4, a three-loop design separates the inner stabilization and rate feedback loops from outer guidance and tracking loops. The control law structure primarily assigns the overall stabilization task to the inner loop 440. Next, the middle loop 430 provides rate augmentation. The outer loop 420 focuses on guidance and tracking tasks. Since the inner loop 440 and the rate loop 430 provide most of the stabilization, less control effort is required at the outer loop level. As representatively illustrated in Figure 4, a switch 425 is provided to turn the third-loop flight augmentation on and off.

In some embodiments, the inner loop and the rate loop include a set of gains and filters applied to the roll/pitch/yaw 3-axis rate gyro and the acceleration feedback sensors. Both the inner loop and the rate loop may stay active, independent of various outer loop hold modes. The outer loop 420 may include cascaded layers of loops, including an attitude loop, a speed loop, a position loop, a vertical speed loop, an altitude loop, and a heading loop.

The sum of the inner loop 440, the rate loop 430, and the outer loop 420 are applied to the decoupler 450. The decoupler 450 approximately decouples the 4-axes (pitch, roll, yaw, and collective pitch (vertical)) such that, for example, forward longitudinal stick input does not require the pilot to push the stick diagonally for manual deconvolution. Similarly, as collective pull increases torque and results in an increased anti-torque requirement, the decoupler 450 may provide both the necessary pedal and a portion of cyclic (e.g., if the rotorcraft 100 has a canted tail rotor) to counter the increased torque. In accordance with representative embodiments, the decoupling of plural flight characteristics allows for a control-law -automated, -mediated, or at least -assisted change in the pitch angle, the roll angle, the yaw rate, or the collective pitch angle, e.g., attending the performance of an approach maneuver (e.g., an offshore approach).

A pilot may use a Cat-A takeoff procedure to safely take off in a rotorcraft. The Cat-A takeoff procedure may include a takeoff decision point (TDP), which may be used as a reference point to ensure that the pilot may takeoff safely, even in the event of an engine failure. For example, the Cat-A takeoff procedure requires that if an engine fails before the rotorcraft reaches the TDP, the takeoff is aborted and the pilot controls the rotorcraft to make a landing. On the other hand, if the rotorcraft loses an engine after the rotorcraft reaches the TDP, the pilot climbs from the point of engine failure and accelerates to a forward flight speed. Accordingly, the Cat-A takeoff procedure is used to ensure that the pilot safely performs a takeoff procedure in the rotorcraft.

Profiles for Cat-A takeoff procedures vary between different rotorcraft and are also dependent on the type of takeoff to be performed. For example, a Cat-A takeoff procedure may be used for a takeoff from a runway, a takeoff from a ground-level helipad, or a takeoff from an elevated helipad; and the Cat-A takeoff procedure may be different for each of these different takeoff types. The pilot may manually calculate the TDP and determine a flight path for a takeoff procedure, or the pilot may enter conditions for a takeoff into a rotorcraft and the rotorcraft may calculate the TDP. Systems available in current rotorcrafts may provide some guidance to the pilot in performing a Cat-A takeoff procedure; however, these systems do not update the guidance based on current conditions of the rotorcraft, nor do these systems allow the pilot to choose between various takeoff types.

Embodiments of the current application relate to a system and method for providing guidance cues to a pilot engaging in a Cat-A takeoff procedure. The rotorcraft 100 may provide different guidance cues depending on what type of takeoff type is selected by the pilot. The rotorcraft 100 may further update the Cat-A takeoff profile and the guidance cues depending on the current conditions of the rotorcraft 100. In some embodiments, the rotorcraft 100 may perform the Cat-A takeoff procedure automatically after the pilot enters conditions and engages the takeoff procedure. This system and method frees the pilot from having to calculate the TDP, provides real-time guidance to the pilot while performing a Cat-A takeoff, and helps the pilot to safely perform the Cat-A takeoff procedure.

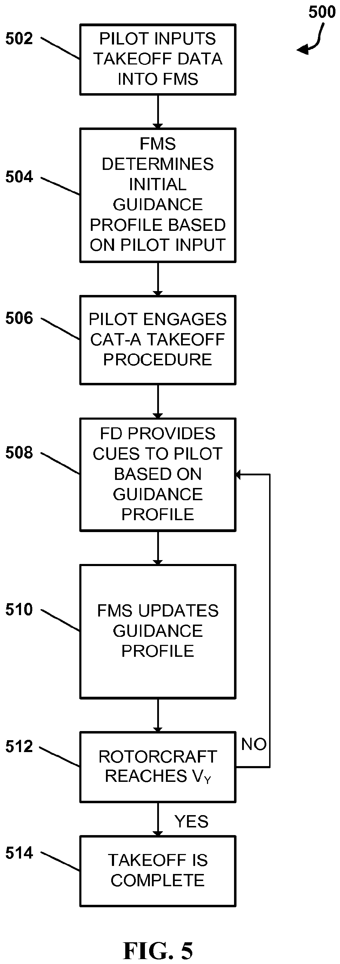

Figure 5 illustrates a flow diagram of a method 500 for performing a Cat-A takeoff procedure in a rotorcraft 100. In block 502, a pilot of the rotorcraft 100 enters takeoff data into a flight management system (FMS) of the rotorcraft 100. The takeoff data may include the type of takeoff procedure to be made, ambient condition data, the gross weight of the rotorcraft 100, or the like. The type of takeoff procedure to be made may be selected from a runway takeoff, an elevated helipad takeoff, a ground level helipad takeoff, or the like. The pilot may also enter a TDP adjustment value for the takeoff. For example, in cases in which there is an obstacle near the takeoff position, the pilot may enter an adjustment value for the TDP. The ambient condition data may include the wind direction, the wind speed, the pressure altitude, the outside ambient temperature, the density altitude, or the like. In some embodiments, some or all of the approach data may be automatically populated by default, through sensors located on the rotorcraft 100, or through data received from a source outside of the rotorcraft 100.

In block 504, the FMS determines an initial guidance profile based on the takeoff data input by the pilot. The guidance profile may include various waypoints for performing a Cat-A takeoff procedure. In some embodiments, the waypoints may include an in ground effect (IGE) hover point, the TDP, an optional take-off safety speed (VTOSS) point, and an optimal rate-of-climb speed (VY) point. The IGE hover point is the point at which the rotorcraft 100 moves from an in-ground effect (IGE) condition to an out of ground effect (OGE) condition. As discussed previously, the TDP is the point before which the pilot makes a landing if an engine failure occurs and after which the pilot continues a takeoff procedure if an engine failure occurs. The VTOSS point is the point at which the rotorcraft 100 reaches the Cat-A rotorcraft safety speed. This speed may vary depending on the specific rotorcraft performing the Cat-A takeoff procedure. The VY point is the point at which the rotorcraft 100 reaches the speed that will allow for the best rate of climb. This speed may also vary depending on the specific rotorcraft performing the Cat-A takeoff procedure.

In block 506, the pilot inputs a command to engage the Cat-A takeoff procedure. The pilot may input the command to engage the approach into a flight director (FD) in the rotorcraft 100 or the FCC of the rotorcraft 100. In some embodiments, the pilot may input the command to engage the Cat-A takeoff procedure by activating a TDP action key in the FD.

In block 508, the FD provides cues to the pilot based on the guidance profile calculated by the FMS. The cues may be instructions for the pilot to move the cyclic control assembly 262 and the collective control assembly 264 to specific positions in order to fly the rotorcraft 100 to the waypoints generated by the FMS. In some embodiments, the cues may also include instructions for the pilot to move the pedal assemblies 266. In further embodiments, the cues may be instructions indicating a desired direction and speed for the rotorcraft 100 or may indicate changes in direction and speed (e.g., acceleration) for the pilot to engage in. In still further embodiments, the FD may provide controls directly to the FCS in order to perform the Cat-A takeoff procedure automatically, without requiring the pilot's input to the cyclic control assembly 262, the collective control assembly 264, and/or the pedal assemblies 266.

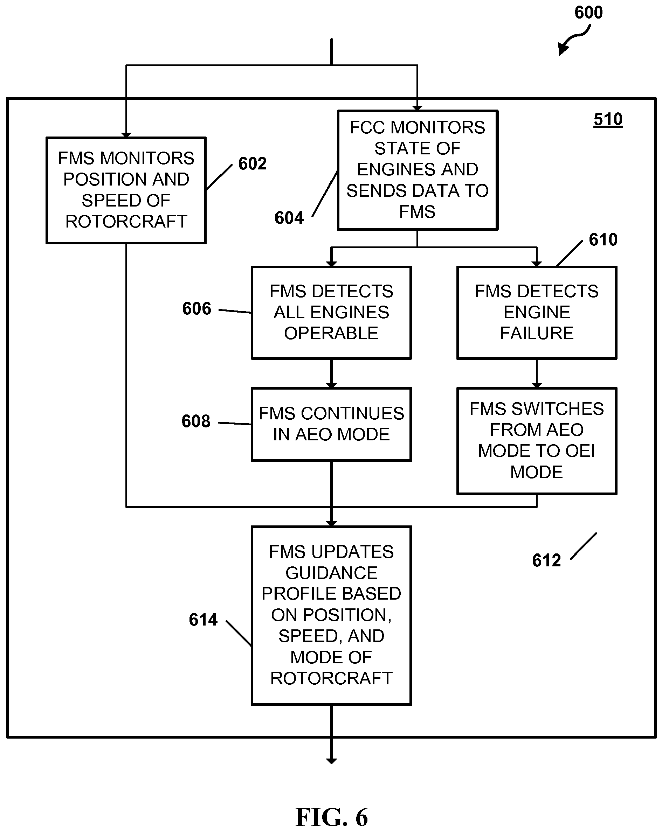

In block 510, the FMS updates the guidance profile based on the conditions of the rotorcraft. Block 510 will be discussed in greater detail below with respect to Figure 6. In block 512, the FMS determines whether the rotorcraft 100 has reached VY. If the rotorcraft 100 has reached VY, the method 500 proceeds to block 514 and the takeoff procedure is completed. If the rotorcraft 100 has not reached VY, the method returns to block 508 and the FD provides cues to the pilot based on the updated guidance profile provided by the FMS.

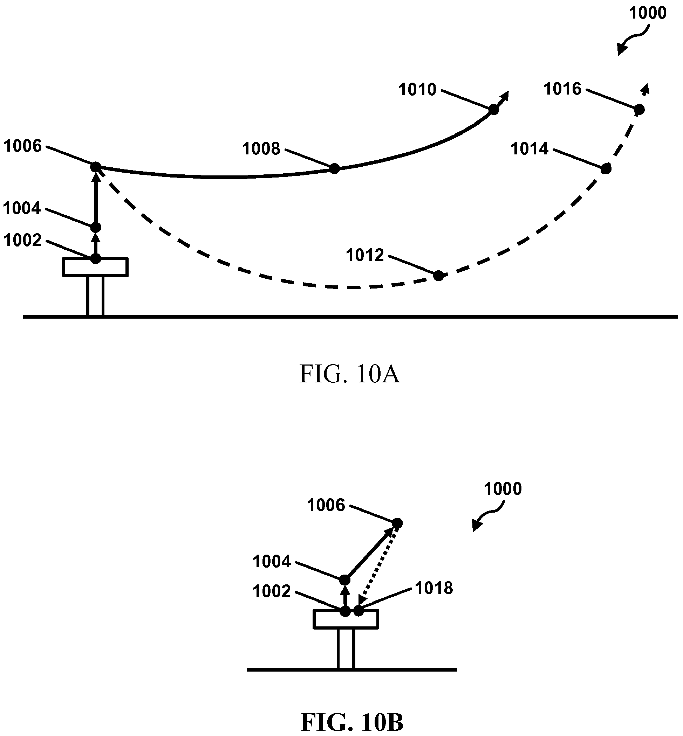

Figure 6 illustrates a method 600 providing further details for block 510 (see Figure 10), wherein the FMS updates the guidance profile based on conditions of the rotorcraft 100. In block 602, the FMS monitors the position and speed of the rotorcraft 100. The FMS may gather data, collectively referred to as position/speed data, from various sensors on the body of the rotorcraft 100, such as global positioning system (GPS) sensors, inertial sensors, other position sensors, and the like, and may also receive data from sources external to the rotorcraft 100 in order to track the position and speed of the rotorcraft 100. The FMS may also track the rotorcraft 100's pitch, yaw, acceleration, and other data relevant to the current condition of the rotorcraft 100.

In block 604, the FCC monitors the state of the rotorcraft 100's engines. The FCC may obtain data indicating the condition of the engines from sensors included in the FCC itself, from internal sensors in the engines, or the like. The FCC then sends a signal to the FMS indicating the engine status in block 604 (e.g., engine status data).

In blocks 606 and 608, the FMS determines whether there has been an engine failure based on the engine status data obtained from the FCC. If the FMS determines that all of the engines are operable in block 606, the method 600 proceeds to block 608 and the FMS continues in an all engines operable (AEO) mode. On the other hand, if the FMS determines that there has been an engine failure in block 610, the method 600 proceeds to block 612 and the FMS switches from the AEO mode to a one engine inoperable (OEI) mode.

In block 614, the FMS updates the guidance profile based on the data provided in blocks 602, and 608 or 612. If the AEO mode is selected in block 608, the FMS may simply update a position of the rotorcraft in the guidance profile based on the position/speed data obtained in block 602. If the OEI mode is selected in block 612, the FMS may determine whether the rotorcraft 100 has reached the TDP and update the guidance profile accordingly. For example, if the rotorcraft 100 has not reached the TDP, the FMS may update the guidance profile to perform a landing. If the rotorcraft 100 has reached the TDP, the FMS may update the guidance profile to continue with the takeoff procedure in the OEI mode.

The methods 500 and 600 allow a pilot to select a Cat-A takeoff procedure type based on the actual conditions present at a site from which the rotorcraft 100 will take off. The methods 500 and 600 further provide cues to the pilot for multiple takeoff profiles and update the cues given to the pilot based on the condition of the rotorcraft 100. As such, the pilot is able to perform a Cat-A takeoff procedure more easily and more safely.

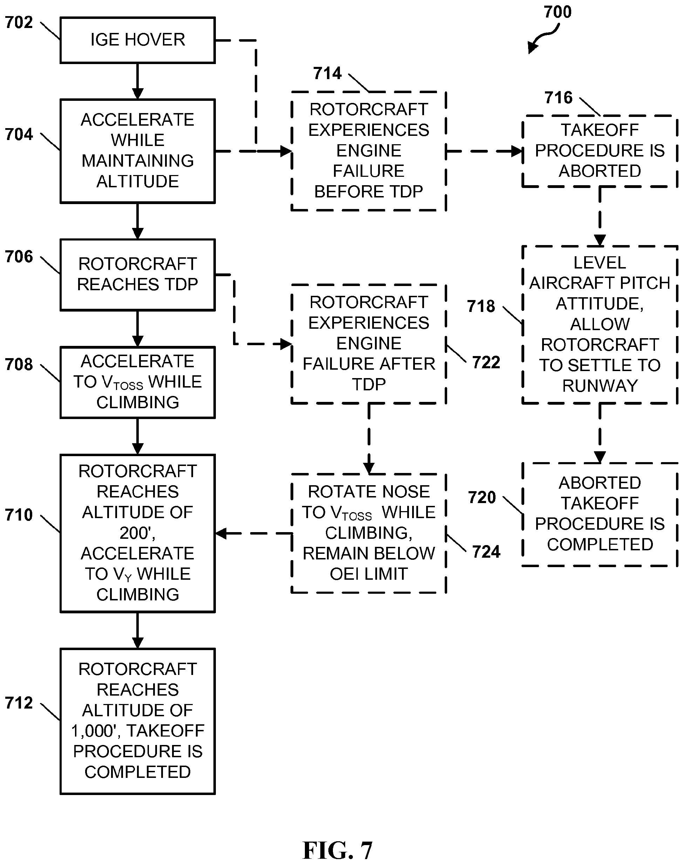

Figures 7-12 illustrate methods for performing Cat-A takeoff procedures and Cat-A takeoff procedure profiles for Cat-A takeoff procedure from various types of takeoff areas. Each of the Cat-A takeoff procedures may include a procedure for performing an all engines operable (AEO) Cat-A takeoff procedure, a one engine inoperable (OEI) Cat-A takeoff procedure, or an aborted Cat-A takeoff procedure.

Figure 7 illustrates a method 700 of performing a Cat-A takeoff procedure from a runway according to some embodiments. In block 702, the FMS cues the pilot to lift off from the runway and perform an in-ground effect (IGE) hover. The IGE hover may be at an altitude of about 10 feet. In block 704, the FMS cues the pilot to input forward cyclic in order to accelerate the rotorcraft 100 while maintaining altitude. The FMS cues the pilot to accelerate the rotorcraft 100 until the rotorcraft 100 reaches the takeoff decision point (TDP). The TDP may be represented by a target airspeed and/or a target height. For example, in some embodiments, the TDP may include an airspeed of between about 20 knots indicated airspeed (KIAS) and about 45 KIAS, such as about 30 knots indicated airspeed (KIAS), or about 35 KIAS and a height of between about 10 feet and about 50 feet, such as about 10 feet. The airspeed for the TDP may be a function of the ambient temperature. For example, the airspeed of the TDP may be about 30 KIAS from a temperature of about -20°C to a maximum outside ambient temperature (OAT) or about 35 KIAS at an OAT of below about -20°C.

Once the rotorcraft 100 reaches the TDP at block 706, the method 700 proceeds to block 708. In block 708, the FMS cues the pilot to accelerate the rotorcraft 100 to VTOSS while climbing. More specifically, the FMS may cue the pilot to achieve a climb rate by pulling the cyclic aft or rearwards and increasing the collective. The FMS may provide further cues to the pilot to manage the collective such that the engines remain below the takeoff power limit. In some embodiments, VTOSS may be an airspeed of between about 35 KIAS and about 60 KIAS, such as about 45 KIAS. The rotorcraft 100 may reach VTOSS at an altitude of greater than about 35 feet.

In block 710, once the rotorcraft 100 reaches an altitude of about 200 feet, the pilot accelerates the rotorcraft 100 to VY while continuing to climb. In some embodiments, VY may be an airspeed of between about 50 KIAS and about 85 KIAS, such as about 60 KIAS or about 70 KIAS. In block 712, once the rotorcraft 100 reaches an altitude of 1,000 feet, the AEO Cat-A takeoff procedure is completed.

If the rotorcraft 100 experiences an engine failure before reaching the TDP, the method 700 proceeds to block 714. In block 716, the takeoff procedure is aborted. In block 718, the FMS instructs the pilot to level the aircraft pitch attitude. The pilot is then cued to allow the rotorcraft 100 to settle back down to a landing or takeoff surface. The FMS further provides cues for the pilot to operate the rotorcraft 100 controls to minimize drift after touch down. Once the rotorcraft 100 touches down, the method 700 proceeds to block 720 and the aborted takeoff procedure is completed.

If the rotorcraft 100 experiences an engine failure after reaching the TDP, the method 700 proceeds to block 722. In block 724, the FMS instructs the pilot to rotate the nose of the rotorcraft 100 to a VTOSS climb attitude while managing the collective. The FMS instructs the pilot to control the rotorcraft 100 to climb until the rotorcraft 100 reaches an altitude of 200 feet above the runway. The FMS provides further cues such that the engine power remains below the one engine inoperative (OEI) power limit. Once the rotorcraft 100 reaches an altitude of 200 feet above the runway, the method 700 proceeds to blocks 710 and 712 normally to complete the OEI Cat-A takeoff procedure.

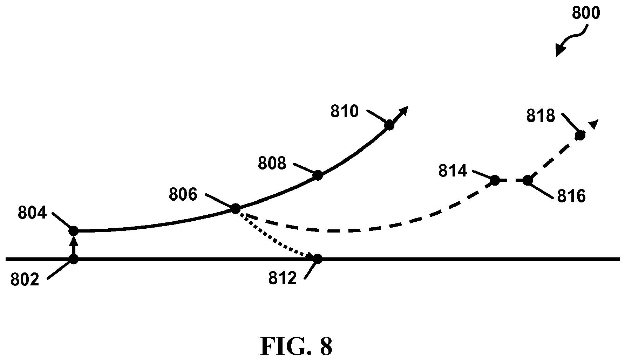

Figure 8 illustrates a takeoff profile 800 for performing a Cat-A takeoff procedure from a runway in a rotorcraft 100 according to some embodiments. The FMS provides cues for the rotorcraft 100 to take off at a takeoff point 802 on the runway and ascend to an IGE hover point 804 at a height of between 10 feet and about 50 feet, such as about 10 feet. The FMS then cues the pilot to apply forward cyclic and increased collective to fly the rotorcraft 100 forward towards a TDP 806. The TDP 806 may be an airspeed of between about 20 KIAS and about 45 KIAS, such as about 30 KIAS and an altitude of between about 10 feet and about 50 feet, such as about 10 feet. If the rotorcraft 100 experiences an engine failure before the TDP 806, the FMS cues the pilot to level the aircraft pitch attitude and allow the rotorcraft 100 to settle back to the runway at a landing point 812 to complete the aborted CAT-A takeoff procedure.

Once the rotorcraft 100 reaches the TDP 806, the FMS cues the pilot to accelerate to VTOSS and the rotorcraft 100 begins to climb. Once the rotorcraft 100 reaches an altitude of about 200 feet at a point 808, the FMS cues the pilot to accelerate to VY and climb to an altitude of about 1,000 feet at a point 810 to complete the AEO Cat-A takeoff procedure. If the rotorcraft 100 experiences an engine failure after the TDP 806, the FMS cues the pilot to rotate the nose of the rotorcraft 100 to VTOSS. The rotorcraft 100 loses altitude, and then the rotorcraft begins to climb. Once the rotorcraft 100 reaches an altitude of about 200 feet at a point 814, the FMS cues the pilot to accelerate to VY at a point 816, and then climb to an altitude of about 1,000 feet at a point 818 to complete the OEI Cat-A takeoff procedure.

The rotorcraft 100 may climb at a rate of between about 0 feet/min and about 1,000 feet/min, such as about 100 feet/min at VTOSS and the rotorcraft 100 may climb at a rate of between about 100 feet/min and about 1,000 feet/min, such as about 150 feet/min at VY. Furthermore, the rotorcraft 100 may have a speed of between about 35 KIAS and about 60 KIAS, such as about 45 KIAS at VTOSS and the rotorcraft 100 may have a speed of between about 50 KIAS and about 85 KIAS, such as about 60 KIAS or about 70 KIAS at VY. The rotorcraft may reach VTOSS at a minimum altitude of between 10 feet and about 50 feet, such as about 35 feet.

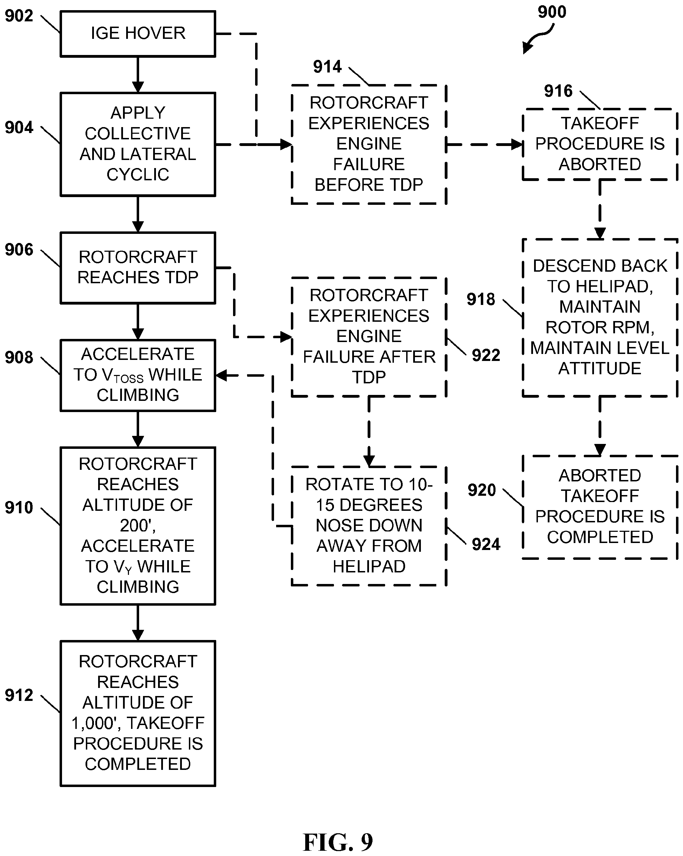

Figure 9 illustrates a method 900 of performing a Cat-A takeoff procedure from an elevated helipad according to some embodiments. In block 902 the FMS cues the pilot to lift off from the elevated helipad and perform an in-ground effect (IGE) hover. The IGE hover may be at an altitude of about 4 feet above the elevated helipad. In block 904, the FMS cues the pilot to increase the collective and apply lateral cyclic in order to achieve a slow lateral climb to the TDP. The TDP for a Cat-A takeoff procedure from an elevated platform may be represented by a target height. For example, in some embodiments, the TDP may be an altitude of between about 10 feet and about 50 feet above the helipad, such as about 35 feet above the helipad. Because the FMS cues the pilot to apply lateral cyclic while increasing the collective, the rotorcraft 100 moves to the side of the helipad as the rotorcraft 100 approaches the TDP. In some embodiments, the rotorcraft 100 may rise at an angle of about 45°, such that the rotorcraft 100 is disposed laterally away from the rotorcraft 100's takeoff point on the elevated helipad by about 35 feet.

Once the rotorcraft 100 reaches the TDP at block 906, the method 900 proceeds to block 908. In block 908, the FMS cues the pilot to accelerate the rotorcraft 100 to VTOSS while climbing. The rotorcraft 100 may drop in altitude to below the TDP before beginning to climb. The FMS may cue the pilot to achieve a positive climb rate by increasing the collective and applying forward cyclic. In some embodiments, VTOSS may be an airspeed of between about 35 KIAS and about 60 KIAS, such as about 45 KIAS.

In block 910, once the rotorcraft 100 reaches an altitude of about 200 feet, the FMS cues the pilot to accelerate the rotorcraft 100 to VY while continuing to climb. In some embodiments, VY may be an airspeed of between about 50 KIAS and about 85 KIAS, such as about 60 KIAS or about 70 KIAS. In block 912, once the rotorcraft 100 reaches an altitude of 1,000 feet, the AEO Cat-A takeoff procedure is completed.

If the rotorcraft 100 experiences an engine failure in block 914 before reaching the TDP in block 916, the takeoff procedure is aborted. In block 918, the FMS cues the pilot to begin a descent back to the helipad. The FMS supplies cues for the pilot to maintain an adequate rotor RPM and to maintain the rotorcraft 100 at a fairly level attitude. The FMS cues the pilot to apply collective in order to cushion the rotorcraft 100's landing on the helipad. Once the rotorcraft 100 lands back on the helipad, the aborted takeoff procedure is completed in block 920.

If the rotorcraft 100 experiences an engine failure in block 922 after reaching the TDP in block 924, the FMS cues the pilot to rotate the nose of the rotorcraft 100 to between about 10 degrees and about 15 degrees dose down and slightly away from the helipad. This ensures that the rotorcraft 100 will clear the edge of the deck of the helipad. The method then proceeds to block 908 and the FMS cues the pilot to accelerate the rotorcraft 100 to VTOSS. In accelerating to VTOSS, the rotorcraft 100 may drop down below the level of the helipad before beginning to climb. The FMS may provide additional cues to ensure that the rotorcraft 100 stays above a certain altitude. For instance, the FMS may ensure that the rotorcraft 100 maintains an altitude of at least about 15 feet above the ground or sea level. The rotorcraft 100 may reach VTOSS at an altitude below the top surface of the helipad. The method may then proceed normally to blocks 910 and 912 to complete the OEI Cat-A takeoff procedure.

Figures 10A and 10B illustrate a side view and a front view of a takeoff profile 1000 for performing a Cat-A takeoff from an elevated helipad, respectively, according to some embodiments. As illustrated in Figure 10A, the FMS provides cues to the pilot to take off from a takeoff point 1002 on the elevated helipad and ascend to an IGE hover point 1004 at a height of between about 4 feet and about 20 feet, such as about 4 feet. The FMS then cues the pilot to increase the collective and apply lateral cyclic in order to achieve a slow, lateral climb to a TDP 1006. As illustrated in Figure 10B, the TDP 1006 may be disposed to the side of the takeoff point 1002. In some embodiments, the TDP 1006 may have a height of between about 10 feet and about 50 feet, such as about 35 feet above the helipad. The TDP 1006 may be disposed laterally from the takeoff point 1002 by a distance of between about 10 feet and about 40 feet, such as about 35 feet.

If the rotorcraft 100 experiences an engine failure before reaching the TDP 1006, the FMS provides cues to the pilot to descend back to the helipad, while maintaining adequate rotor RPM and maintaining a fairly level attitude. The rotorcraft 100 may land on the helipad at a landing point 1018, as illustrated in Figure 10B, to complete the aborted Cat-A takeoff procedure. In some embodiments, the landing point 1018 may be disposed to the side of, or otherwise away from the takeoff point 1002. In other embodiments, the landing point 1018 may be the same as the takeoff point 1002.

Once the rotorcraft 100 reaches the TDP 1006, the FMS cues the pilot to accelerate to VTOSS. The rotorcraft 100 may drop below the altitude of the TDP 1006, and then begin to climb. Once the rotorcraft 100 reaches an altitude of about 200 feet at a point 1008, the pilot accelerates to VY and climbs to an altitude of about 1,000 feet at a point 1010 to complete the AEO Cat-A takeoff procedure.

If the rotorcraft 100 experiences an engine failure after the TDP 1006, the FMS cues the pilot to rotate the nose of the rotorcraft 100 to 10 to 15 degrees nose down and slightly away from the helipad to ensure that the rotorcraft 100 clears the edge of the deck of the helipad. The FMS cues the pilot to accelerate the rotorcraft 100 to VTOSS and climb to an altitude of about 200 feet above the top surface of the helipad. The rotorcraft 100 may lose altitude in accelerating to VTOSS and may drop below the altitude of the top surface of the helipad before beginning to climb. The FMS may further provide cues to the pilot to ensure that the rotorcraft 100 maintains a certain minimum altitude. For example, the minimum altitude for the rotorcraft 100 may be between about 10 feet and about 25 feet above sea-level or above ground-level, such as about 15 feet. Once the rotorcraft 100 reaches an altitude of about 200 feet at the point 1014, the FMS cues the pilot to accelerate to VY and climb to an altitude of about 1,000 feet at a point 1016 to complete the OEI Cat-A takeoff procedure.

The rotorcraft 100 may climb at a rate of between about 0 feet/min and about 1,000 feet/min, such as about 100 feet/min at VTOSS and the rotorcraft 100 may climb at a rate of between about 100 feet/min and about 1,000 feet/min, such as about 150 feet/min at VY. Furthermore, the rotorcraft 100 may have a speed of between about 35 KIAS and about 60 KIAS, such as about 45 KIAS at VTOSS and the rotorcraft 100 may have a speed of between about 50 KIAS and about 85 KIAS, such as about 60 KIAS or about 70 KIAS at VY. The rotorcraft may reach VTOSS at a minimum altitude of between 10 feet and about 50 feet, such as about 35 feet.

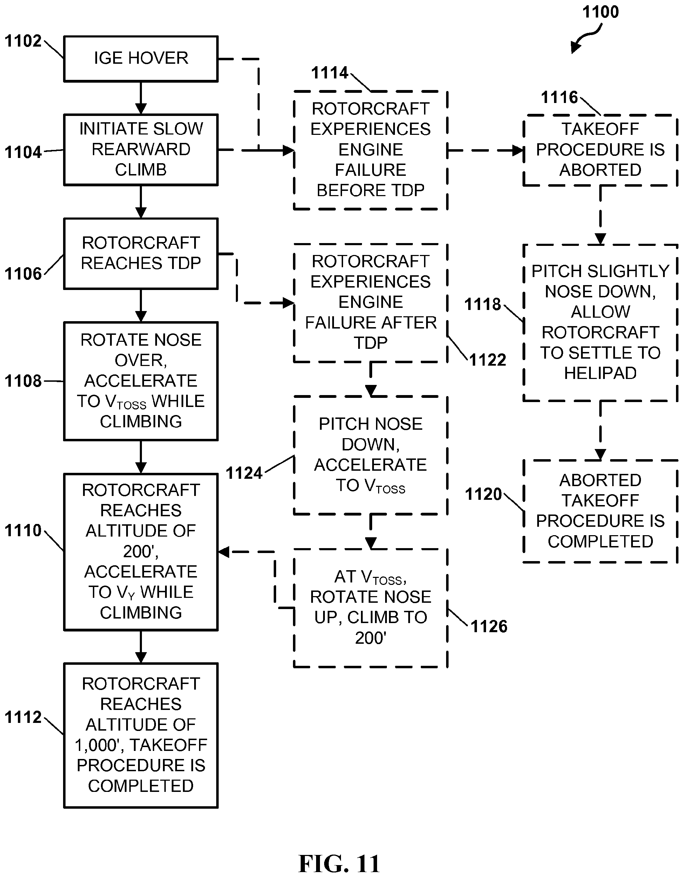

Figure 11 illustrates a method 1100 of performing a Cat-A takeoff procedure from a ground-level helipad according to some embodiments. In block 1102 the FMS cues the pilot to lift off from the helipad and perform an in-ground effect (IGE) hover. The IGE hover may be at an altitude of about 4 feet above the helipad. In block 1104, the FMS cues the pilot to initiate a slow rearward climb to the TDP. The FMS may provide cues to the pilot to climb at an angle of about 45 degrees. The TDP for a Cat-A takeoff procedure from a ground-level helipad may be represented by a target height. For example, in some embodiments, the TDP may be an altitude of between about 80 feet and about 120 feet, such as about 90 feet above the helipad.

Once the rotorcraft 100 reaches the TDP at block 1106, the method 1100 proceeds to block 1108. In block 1108, the pilot rotates accelerates to VTOSS and begins to climb. The pilot may rotate the nose of the rotorcraft 100 to between about 20 degrees and about 25 degrees nose down. Once the airspeed needle begins to move, the FMS may cue the pilot to begin to level the rotorcraft 100 and continue to accelerate to VTOSS. The rotorcraft 100 may drop below the TDP, but the FMS may provide cues to the pilot to maintain a certain minimum altitude. For example, the minimum altitude may be about 15 feet above the ground. The rotorcraft 100 may reach VTOSS at a minimum altitude, such as about 35 feet above the ground. In some embodiments, VTOSS may be an airspeed of between about 35 KIAS and about 60 KIAS, such as about 45 KIAS.

Once the rotorcraft 100 reaches an altitude of about 200 feet, the FMS cues the pilot to accelerate the rotorcraft 100 to VY while continuing to climb in block 1110. In some embodiments, VY may be an airspeed of between about 50 KIAS and about 85 KIAS, such as about 60 KIAS or about 70 KIAS. Once the rotorcraft 100 reaches an altitude of 1,000 feet, the AEO Cat-A takeoff procedure is completed in block 1112.

If the rotorcraft 100 experiences an engine failure before reaching the TDP in block 1114, the takeoff procedure is aborted in block 1116. In block 1118, the FMS cues the pilot to pitch the rotorcraft 100 slightly nose down and allow the rotorcraft to settle back to the helipad. The FMS may provide further cues for the pilot to control the rotorcraft 100 to touch down slightly nose high in order to minimize sliding. The FMS may cue the pilot to increase or decrease the collective as required to cushion the landing. Once the rotorcraft 100 lands back on the helipad, the aborted takeoff procedure is completed in block 1120.

If the rotorcraft 100 experiences an engine failure after reaching the TDP in block 1122, the FMS cues the pilot to pitch the nose of the rotorcraft 100 down to accelerate to VTOSS in block 1124. The rotorcraft 100 may drop down in altitude before beginning to climb. More specifically, the FMS may cue the pilot to pitch the nose of the rotorcraft down to about 10 degrees. Once the rotorcraft 100 reaches VTOSS, the FMS cues the pilot to rotate the nose up and climb to an altitude of about 200 feet above the helipad in block 1126. The FMS may provide cues to the pilot to ensure that the rotorcraft 100 remains at an altitude of at least about 15 feet above the helipad. Once, the rotorcraft 100 reaches an altitude of about 200 feet above the helipad, the method 1100 may proceed normally to blocks 1110 and 1112 to complete the OEI Cat-A takeoff procedure.

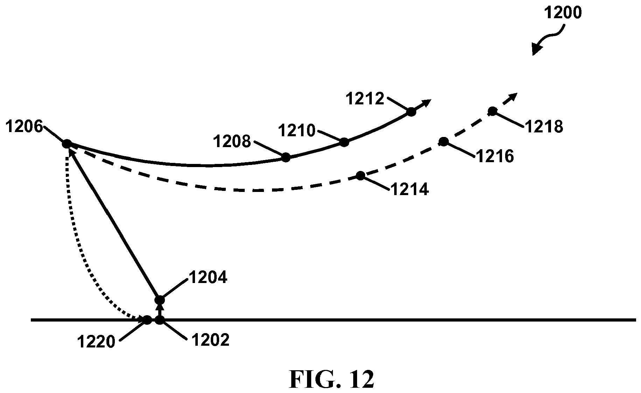

Figure 12 illustrates a side view of a takeoff profile 1200 for performing a Cat-A takeoff procedure from a ground-level helipad according to some embodiments. As illustrated in Figure 12, the FMS provides cues to the pilot to take off from a takeoff point 1202 on the ground-level helipad and ascend to an IGE hover point 1204 at a height of between about 4 feet and about 20 feet, such as about 4 feet. The FMS then cues the pilot to perform a slow rearward climb to a TDP 1206. In some embodiments, the TDP 1206 may have a height of between about 80 feet and about 120 feet such as about 90 feet above the helipad. The TDP 1206 may be disposed behind the helipad by a distance of between about 80 feet and about 120 feet, such as about 90 feet. Accordingly, the rotorcraft climbs upward and rearward at an angle of about 45 degrees to reach the TDP 1206.

If the rotorcraft 100 experiences an engine failure before reaching the TDP 1206, the FMS provides cues to the pilot to descend back to the helipad by pitching the nose of the rotorcraft 100 down. The FMS cues the pilot to control the rotorcraft 100 to touch down slightly nose high in order to minimize sliding and increase or decrease collective as required to cushion the landing. The rotorcraft 100 may land on the helipad at a landing point 1220 to complete the aborted Cat-A takeoff procedure. In some embodiments, the landing point 1220 may be disposed in front of, behind, or to the side of the takeoff point 1202. In other embodiments, the landing point 1220 may be the same as the takeoff point 1202.

Once the rotorcraft 100 reaches the TDP 1206, the FMS cues the pilot to accelerate to VTOSS and begin to climb. The FMS may cue the pilot to rotate the nose of the rotorcraft 100 to between about 20 and about 25 degrees nose down to begin accelerating to VTOSS. The FMS may cue the pilot to begin to level the rotorcraft 100 once the airspeed needle begins to move and continue to accelerate to VTOSS. The rotorcraft 100 may reach VTOSS at a point 1208. After the point 1208, the FMS may continue to cue the pilot to climb at VTOSS until the rotorcraft 100 reaches an altitude of about 200 feet above the helipad at a point 1210. Once the rotorcraft 100 reaches the point 1210, the FMS cues the pilot to accelerate to VY and climb to an altitude of about 1,000 feet at a point 1212 to complete the AEO Cat-A takeoff procedure.

If the rotorcraft 100 experiences an engine failure after the TDP 1206, the FMS cues the pilot to rotate the nose of the rotorcraft 100 to about 10 degrees nose down to accelerate to VTOSS. The rotorcraft 100 may initially drop in altitude and then begin to climb. The rotorcraft 100 may reach VTOSS at a point 1214 and the FMS may cue the pilot to maintain VTOSS until the rotorcraft reaches an altitude of about 200 feet above the helipad at a point 1216. Once the rotorcraft 100 reaches an altitude of about 200 feet at the point 1216, the FMS cues the pilot to accelerate to VY and climb to an altitude of about 1,000 feet at a point 1218 to complete the OEI Cat-A takeoff procedure.

The rotorcraft 100 may climb at a rate of between about 0 feet/min and about 1,000 feet/min, such as about 100 feet/min at VTOSS and the rotorcraft 100 may climb at a rate of between about 100 feet/min and about 1,000 feet/min, such as about 150 feet/min at VY. Furthermore, the rotorcraft 100 may have a speed of between about 35 KIAS and about 60 KIAS, such as about 45 KIAS at VTOSS and the rotorcraft 100 may have a speed of between about 50 KIAS and about 85 KIAS, such as about 60 KIAS or about 70 KIAS at VY. The rotorcraft may reach VTOSS at a minimum altitude of between 10 feet and about 50 feet, such as about 35 feet. The FMS may cue the pilot to control the rotorcraft 100 to maintain a minimum altitude of about 15 feet in either the AEO Cat-A takeoff approach or the OEI Cat-A takeoff approach.

In accordance with an embodiment, a rotorcraft includes a rotor system including a plurality of blades; two or more engines operable to rotate the plurality of blades; a control assembly operable to receive commands from a pilot; a flight control computer (FCC) in signal communication with the two or more engines, the FCC being operable to generate engine data indicating whether the two or more engines are functional; and a flight management system (FMS) in signal communication with the control assembly and the FCC, the FMS being operable to receive a takeoff type and a plurality of takeoff parameters input into the FMS by the pilot; generate a guidance profile for a Category A (Cat-A) takeoff procedure based on the takeoff type and the plurality of takeoff parameters, the Cat-A takeoff procedure including one or more decision points for performing a takeoff procedure based on whether all engines are operable or one engine is inoperable; receive a command to engage in a takeoff procedure from the control assembly; in response to the command to engage in the takeoff procedure, provide guidance cues to a pilot of the rotorcraft; receive the engine data from the FCC during operation of the rotorcraft; and update the guidance profile based on the engine data during operation of the rotorcraft. In an embodiment, the FMS is further configured to generate location data based on the current location of the rotorcraft and update the guidance profile based on the location data. In an embodiment, the takeoff type includes a runway takeoff, an elevated helipad takeoff, or a ground-level helipad takeoff. In an embodiment, the takeoff parameters include ambient condition data and rotorcraft data. In an embodiment, the ambient condition data includes one or more of a wind direction, a wind speed, a pressure altitude, an outside ambient temperature (OAT), and a density altitude.

In accordance with another embodiment, a method for operating a rotorcraft includes receiving takeoff data in a flight management system (FMS), the takeoff data comprising a takeoff type, ambient condition parameters, and helicopter parameters; generating a guidance profile in the FMS for a Category A (Cat-A) takeoff procedure based on the takeoff data, the guidance profile comprising a plurality of waypoints, the plurality of waypoints comprising one or more decision points used to direct the operation of the rotorcraft in case of an engine failure; receiving a command in the FMS to engage in a takeoff procedure; providing cues to a pilot to fly the rotorcraft along the guidance profile; and updating the guidance profile as the rotorcraft moves along the guidance profile. In an embodiment, the guidance profile is updated based on location data indicating the location of the rotorcraft. In an embodiment, the rotorcraft includes two or more engines, and the guidance profile is updated based on engine data indicating whether the two or more engines are operable or inoperable. In an embodiment, the plurality of waypoints includes a takeoff decision point (TDP), and updating the guidance profile includes guiding the rotorcraft to a landing point in response to the engine data indicating that at least one of the two or more engines is inoperable before the rotorcraft has reached the TDP. In an embodiment, updating the guidance profile includes continuing the takeoff procedure in response to the engine data indicating that at least one of the two or more engines is inoperable after the rotorcraft has reached the TDP. In an embodiment, the takeoff type is a runway takeoff, an elevated helipad takeoff, or a ground-level helipad takeoff. In an embodiment, the takeoff type is the runway takeoff and the takeoff decision point (TDP) includes an airspeed of 30 KIAS and a height of 10 feet. In an embodiment, the takeoff type is the elevated helipad takeoff and the takeoff decision point (TDP) is a height of 35 feet above a top surface of an elevated helipad from which the rotorcraft is to takeoff. In an embodiment, the takeoff type is the ground-level takeoff and the takeoff decision point (TDP) is a height of between 80 feet and 120 feet above a top surface of a ground-level helipad from which the rotorcraft is to takeoff.

In accordance with yet another embodiment, a device for a rotorcraft includes a processor; and a non-transitory computer-readable storage medium storing a program to be executed by the processor, the program including instructions for providing guidance cues to a pilot for performing a takeoff procedure, the instructions for providing the guidance cues including instructions for generating a flight path in response to the pilot entering takeoff data, the flight path including a plurality of waypoints between a current location of the rotorcraft and a completed takeoff point (CTP), the takeoff data including a takeoff type, ambient condition parameters, and a gross weight of the rotorcraft; generating the guidance cues to fly the rotorcraft along the flight path to the CTP; displaying the guidance cues to the pilot in response to the pilot entering an engage takeoff command; updating flight path and the guidance cues in response to flight data provided to the processor, the flight data indicating a current condition of the rotorcraft; and displaying the updated guidance cues to the pilot. In an embodiment, the takeoff procedure includes a Cat-A takeoff procedure. In an embodiment, the flight data includes data indicating whether two or more engines of the rotorcraft are operable or inoperable. In an embodiment, the plurality of waypoints includes a takeoff decision point (TDP), the updated flight path includes a plurality of waypoints between a current location of the rotorcraft and a landing point when the flight data indicates that two or more of the engines of the rotorcraft are inoperable before the rotorcraft reaches the TDP. In an embodiment, the plurality of waypoints includes a takeoff decision point (TDP), wherein the updated flight path includes a plurality of waypoints between a current location of the rotorcraft and an updated CTP when the flight data indicates that two or more of the engines of the rotorcraft are inoperable after the rotorcraft reaches the TDP. In an embodiment, the takeoff type includes a runway takeoff, an elevated helipad takeoff, or a ground-level helipad takeoff.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A rotorcraft comprising:
a rotor system comprising a plurality of blades;
two or more engines operable to rotate the plurality of blades;
a control assembly operable to receive commands from a pilot;
a flight control computer (FCC) in signal communication with the two or more engines, the FCC being operable to generate engine data indicating whether the two or more engines are functional; and
a flight management system (FMS) in signal communication with the control assembly and the FCC, the FMS being operable to:
receive a takeoff type and a plurality of takeoff parameters input into the FMS by the pilot;
generate a guidance profile for a Category A (Cat-A) takeoff procedure based on the takeoff type and the plurality of takeoff parameters, the Cat-A takeoff procedure including one or more decision points for performing a takeoff procedure based on whether all engines are operable or one engine is inoperable;
receive a command to engage in a takeoff procedure from the control assembly;
in response to the command to engage in the takeoff procedure, provide guidance cues to a pilot of the rotorcraft;
receive the engine data from the FCC during operation of the rotorcraft; and
update the guidance profile based on the engine data during operation of the rotorcraft.

2. The rotorcraft of claim 1, wherein the FMS is further configured to generate location data based on the current location of the rotorcraft and update the guidance profile based on the location data.

3. The rotorcraft of claim 1 or of claim 2, wherein the takeoff type comprises a runway takeoff, an elevated helipad takeoff, or a ground-level helipad takeoff.

4. The rotorcraft of claim 1 or of claim 2 or of claim 3, wherein the takeoff parameters comprise ambient condition data and rotorcraft data.

5. The rotorcraft of claim 4, wherein the ambient condition data comprises one or more of a wind direction, a wind speed, a pressure altitude, an outside ambient temperature (OAT), and a density altitude.

6. A method for operating a rotorcraft, the method comprising:
receiving takeoff data in a flight management system (FMS), the takeoff data comprising a takeoff type, ambient condition parameters, and helicopter parameters;
generating a guidance profile in the FMS for a Category A (Cat-A) takeoff procedure based on the takeoff data, the guidance profile comprising a plurality of waypoints, the plurality of waypoints comprising one or more decision points used to direct the operation of the rotorcraft in case of an engine failure;
receiving a command in the FMS to engage in a takeoff procedure;
providing cues to a pilot to fly the rotorcraft along the guidance profile; and
updating the guidance profile as the rotorcraft moves along the guidance profile.

7. The method of claim 6, wherein the guidance profile is updated based on location data indicating the location of the rotorcraft.

8. A device for a rotorcraft comprising:
a processor; and
a non-transitory computer-readable storage medium storing a program to be executed by the processor, the program including instructions for providing guidance cues to a pilot for performing a takeoff procedure, the instructions for providing the guidance cues including instructions for:
generating a flight path in response to the pilot entering takeoff data, the flight path comprising a plurality of waypoints between a current location of the rotorcraft and a completed takeoff point (CTP), the takeoff data comprising a takeoff type, ambient condition parameters, and a gross weight of the rotorcraft;
generating the guidance cues to fly the rotorcraft along the flight path to the CTP;
displaying the guidance cues to the pilot in response to the pilot entering an engage takeoff command;
updating flight path and the guidance cues in response to flight data provided to the processor, the flight data indicating a current condition of the rotorcraft; and
displaying the updated guidance cues to the pilot.

9. The method of claim 6 or of claim 7, wherein the rotorcraft comprises two or more engines, and wherein the guidance profile is updated based on engine data indicating whether the two or more engines are operable or inoperable; or
the device of claim 8, wherein the flight data comprises data indicating whether two or more engines of the rotorcraft are operable or inoperable.

10. The method of claim 9, wherein the plurality of waypoints comprises a takeoff decision point (TDP), and wherein updating the guidance profile includes guiding the rotorcraft to a landing point in response to the engine data indicating that at least one of the two or more engines is inoperable before the rotorcraft has reached the TDP; or
the device of claim 9, wherein the plurality of waypoints comprises a takeoff decision point (TDP), wherein the updated flight path comprises a plurality of waypoints between a current location of the rotorcraft and a landing point when the flight data indicates that two or more of the engines of the rotorcraft are inoperable before the rotorcraft reaches the TDP.

11. The method of claim 9 or of claim 10, wherein updating the guidance profile includes continuing the takeoff procedure in response to the engine data indicating that at least one of the two or more engines is inoperable after the rotorcraft has reached the TDP; or
the device of claim 9 or of claim 10, wherein the plurality of waypoints comprises a takeoff decision point (TDP), wherein the updated flight path comprises a plurality of waypoints between a current location of the rotorcraft and an updated CTP when the flight data indicates that two or more of the engines of the rotorcraft are inoperable after the rotorcraft reaches the TDP.

12. The method of claim 6 or of any preceding method claim, or the device of claim 8 or of any preceding device claim, wherein the takeoff type comprises a runway takeoff, an elevated helipad takeoff, or a ground-level helipad takeoff.

13. The method of claim 12, wherein the takeoff type comprises the runway takeoff and the or a takeoff decision point (TDP) comprises an airspeed of 30 KIAS and a height of 10 feet.

14. The method of claim 12, wherein the takeoff type comprises the elevated helipad takeoff and wherein the or a takeoff decision point (TDP) comprises a height of 35 feet above a top surface of an elevated helipad from which the rotorcraft is to takeoff.

15. The method of claim 12, wherein the takeoff type comprises the ground-level takeoff and wherein the or a takeoff decision point (TDP) comprises a height of between 80 feet and 120 feet above a top surface of a ground-level helipad from which the rotorcraft is to takeoff.

16. The device of claim 8 or any preceding device claim, wherein the takeoff procedure comprises a Cat-A takeoff procedure.
